# EUROPEAN PATENT APPLICATION

(11) **EP 4 571 952 A1**
(43) Date of publication of application: **18.06.2025**
(21) Application number: 23217112.4
(22) Date of filing: 15.12.2023
(51) Int. Cl.: H01M 50/105, B29C 65/18, B29C 65/00, H01M 50/112, H01M 50/148, H01M 50/178, H01M 50/553

(54) **BATTERY CELL, DEVICE FOR MANUFACTURING A BATTERY CELL, AND METHODS FOR SEALING POUCH FOILS**

(71) Applicant: Customcells Holding GmbH, 25524 Itzehoe (DE)
(72) Inventor: Paulus, Alexander, 25524 Itzehoe (DE)
(74) Representative: LKGLOBAL Lorenz & Kopf Patentanwalt Attorney at Law PartG mbB

(57) **Abstract**

A first aspect of the present disclosure is related to a battery cell, comprising:
- a plurality of cavities each hosting an electrode stack;
wherein at least two of the cavities are separated by a first-dimension pouch foil, which has a pre-defined extension in a first dimension and a pre-defined extension in a third dimension.

## Description

### Technical Field

This disclosure is related to battery cells with multiple cavities, devices for manufacturing battery cells with multiple cavities, and methods for sealing pouch foils for batteries with multiple cavities.

### Background

Electric pouch cells are a type of battery technology, e.g. for lithium-ion batteries, characterized by their packaging and construction structures. Unlike cylindrical or prismatic cells, pouch cells are housed in flexible, aluminum-coated, laminated foil pouches. This design can significantly reduce weight and allow for more versatile shapes and sizes, optimizing space utilization in various applications. The pouch format also offers improved thermal management due to the larger surface area and less rigid containment, which can be critical when water consumption is high. Internally, pouch cells consist of layers of electrodes and separators that are stacked or folded inside the pouch to form a stack of electrodes or a jelly roll. Further improvements, particularly with respect of weight and performance characteristics, are desirable.

### Summary

An object of the present disclosure is to improve a battery cell.

This object is solved by the disclosed embodiments, which are defined in particular by the subject matter of the independent claims. The dependent claims provide information for further embodiments. Various aspects and embodiments of these aspects are also disclosed in the summary and description below, which provide additional features and advantages.

A first aspect of the present disclosure is related to a battery cell, comprising:
- a plurality of cavities each hosting an electrode stack;
wherein at least two of the cavities are separated by a first-dimension pouch foil, which has a pre-defined extension in a first dimension and a pre-defined extension in a third dimension.

A cavity for an electrode stack can refer to a space or compartment within the battery cell, where the electrode stack is placed. An electrode stack usually consists of multiple electrodes (anodes and cathodes) and separators layered together. An electrode stack can also consist of a wound-up assembly of a cathode layer, a separator layer, and an anode layer (jelly roll). A cavity can be designed to accommodate the electrode stack in a sealed way such that no electrolyte can exit the cavity. A cavity can precisely fit the dimensions of the electrode stack, ensuring that the electrodes and separators are tightly packed without unnecessary space, which could affect the battery's performance. The cavities of a battery cell may be of the same size forming compartments for same-size electrode stacks.

One or more sides, in particular a whole frame, of a cavity in a multi-cavity battery cell may be formed by pouch foils. Additionally also a top and/or a bottom of the cavity can be formed by pouch foil. This is explained in the remainder.

A dimension refers to a virtual first straight line. A two-dimensional system comprises a first dimension and a second dimension. A three-dimensional system comprises an additional third dimension. A dimension can refer to a dimension or axis in a Cartesian coordinate system of perpendicular dimensions.

A pouch foil for electrical batteries, particularly used in pouch cell lithium-ion batteries, is a packaging material that encloses the battery's internal components, including the electrodes and electrolyte. The primary functions of this foil include providing a protective barrier, ensuring structural integrity, and maintaining an internal environment of the battery.

A pouch foil can comprise aluminum. Aluminum can be a primary material of pouch foils. Aluminum seals against moisture and oxygen. Furthermore, it is also lightweight, conductive, and has good thermal properties. Additionally aluminum based pouch foil can be formed by deep drawing. An aluminum pouch foil can be laminated with polymers to enhance its properties. Such polymers can be, e.g. polyethylene, polypropylene, and/or polyethylene terephthalate. Polymer can add mechanical strength, thermal stability, and flexibility to a pouch foil. A construction of the pouch foil can be performed in a layered structure. The thickness of the foil is typically kept as minimal as possible to reduce weight and bulk, but sufficient enough to ensure the integrity and safety of the battery.

By forming a battery cell with a plurality of cavities and providing a pouch foil that separates both cavities, i.e. that forms a common side of both cavities, a multi-cavity battery can be obtained that can be used for a redundant energy source which can in particular provide large voltages at a relatively low weight.

An embodiment of the first aspect is related to a battery cell,
wherein a plurality of electrode stacks are connected in a serial connection.

By connecting the plurality of the electrode stacks in the battery in a serial connection, the battery cell can provide a compounded voltage capacity. This can in particular be useful for applications in which a large voltage needs to be provided and a low weight of the battery cell is desired.

Alternatively, the electrode stacks of the different cavities can also be connected in a parallel connection. This can provide an increased current resource. In particular, the pouch-foils of the different cavities can be interconnected to each other, thereby forming a single, low resistance pole of the battery when connected to the same current collector type of the different electrodes. The other battery pole can be provided by an internal connection of the remaining current collector type of the different electrodes.

An embodiment of the first aspect is related to a battery cell,
comprising two second-dimension pouch foils that form opposite sides of the at least two cavities.

As explained above, a second-dimension can be a dimension perpendicular to the first dimension in which the other pouch foil is arranged. More general, a second dimension can be a dimension that defines another direction as the first dimension. Therefore, the second-dimension pouch foils can be arranged perpendicular to the first-dimension pouch foil. Alternatively, the second dimension-pouch foils can be arranged in another direction than the first dimension. Based on two-second dimension pouch foils that are arranged parallel to each other and which are attached to the first-dimension pouch foil, a rectangular cavity can be provided that is made by pouch foil on three adjacent sides.

A second-dimension pouch foil can have a pre-defined extension in a second dimension and a pre-defined extension in a third dimension.

Sealing one pouch foil to another pouch foil within the meaning of this disclosure relates to joining or attaching one film to another, in particular in such a way that no liquids can penetrate through the sealed area. Sealing can comprise different techniques, e.g. sealing with heat and pressure, by ultrasonic vibrations, electromagnetic waves, with one or more adhesives, by welding (laser welding) or by solvent or solventless lamination.

An embodiment of the first aspect is related to a battery cell,
wherein the first-dimension pouch foil is sealed on a first ending to one of the two second-dimension pouch foils and on a second ending to the second of the two second-dimension pouch foils.

By sealing pouch foils of two different dimensions together a basis for a cavity can be formed.

An embodiment of the first aspect is related to a battery cell,
wherein a second first-dimension pouch foil is sealed to the two second-dimension pouch foils on the opposite cavity side relative to the first first-dimension pouch foil, thereby forming a closed circumference for one cavity.

By sealing a second first-dimension pouch foil to the two second-dimension pouch foils on the side of the cavity that is opposite to the first first-dimension pouch foil a closed circumference, i.e. frame, of pouch foils can be made for a cavity. This can be done without the necessity for a deep drawing operation as with conventional pouch cells, in particular if the four angles between the two first-dimension pouch foils and two the second-dimension pouch foils reach 360°.

Furthermore, an additional cavity can be formed between the second dimension pouch foils. Therefore, only one additional first-dimension pouch-foil has to be arranged between the two second-dimension pouch foils. In this way, by arranging M first-dimension pouch foils between the two second-dimension pouch foils, M -1 cavities can be formed along the second dimension. These cavities can have the same size, by spacing the first dimension pouch foils equally. This would provide a plurality of pouch foils along the second dimension.

An embodiment of the first aspect is related to a battery cell,
wherein a plurality of cavities is separated by the second-dimension pouch foils.

The second-dimension pouch foils can have cavities arranged on both sides. Based on this feature and the fact that the second dimension pouch foils can form a side of a plurality of cavities, a battery cell with a two-dimensional matrix of cavities (i.e. electrode stacks) can be formed. The cavities can then have a tetragonal form. If the cavities have two-dimensional pouch foils on each of their side, N two-dimensional pouch foils can form sides of N - 1 cavities along the first dimension.

This can lead to the following relationship between pouch foils and cavities in a two-dimensional matrix of cavities. A matrix of M first-dimension pouch foils and N second dimension can comprise N - 1 times M - 1 cavities.

An embodiment of the first aspect is related to a battery cell,
comprising a housing made of pouch foil.

A housing relates to the outer shell of the battery. In one example, all inner sides of the cavities and the housing, i.e. the sides (the frame), the top, and the bottom, of the battery cell can be made of pouch foil. The resulting battery cell is then a multi-cavity pouch cell, i.e. a battery cell with structures made only of pouch foil.

An embodiment of the first aspect is related to a battery cell,
comprising a sealing hat placed on top of the electrode stack and sealed with the first-dimension pouch foil and/or with the second-dimension pouch foil.

A housing may consist of first-dimension and second-dimension pouch foils to form the sides of the battery cell. Additionally, the top and/or the bottom can also be made of pouch foil. Therefore, the cavity structures may be sealed with a pre-formed means (so-called "sealing hat") that is configured to cover the top of a cavity. A sealing hat may be formed such that the bottom of the hat forms the top side of a cavity, when sealed to the cavity. Therefore, the bottom of the head can be formed as the top of the cavity, i.e. the hat bottom has a form defined by the cavity sides, e.g. the first-dimension and the second-dimension pouch foils.

The sides of a hat can be used for sealing the sealing hat to the cavity. They can be, e.g. 4 to 8 mm high. In case, the cavities are fully formed by first-dimension and second-dimension pouch foils, these pouch foils have a width (third dimension) that is larger than the length of an electrode stack arranged in the cavity. Then the sealing hat can be placed on the top of the electrode stack. The sides of the sealing hat can then be sealed to the parts of the first-dimension and/or second-dimension pouch foils that extend the electrode stack in their third dimension. A sealing hat may also be used in a corresponding way to seal the bottom of a cavity.

The tabs can either be formed through the sealing hat, e.g. by a sealed incision. Additionally or alternatively, one tap can be connected to the sealing hat, i.e. to the housing of the battery, while another is formed as an isolated pole of the battery.

An embodiment of the first aspect is related to a battery cell,
comprising a sealing hat placed on the bottom of the electrode stack and sealed with the first-dimension pouch foil and/or the second-dimension pouch foil.

For example, the cavities of a multi-cavity pouch cell are sealed on the top by a sealing hat and on the bottom by a sealing hat. And both sealing hats are welded to the parts of the first-dimension and second dimension pouch foils that extend beyond an electrode stack (in the third dimension) arranged in the cavity.

An embodiment of the first aspect is related to a battery cell,
wherein a cathode tab and/or an anode tab extend the cavity on a bottom and/or on a top of the cavity.

On one side of cavity a tab related to one electrode type (cathode or anode), or tabs related to both electrode types (cathode and anode) can exit the cavity. Deepening on the application the tabs can be connected in different ways to provide the energy of the battery.

An embodiment of the first aspect is related to a battery cell,
wherein adjacent cavities comprise tabs of different electrode types on a side not covered by first-dimension and/or second-dimension pouch foils.

This architecture can be used for a serial connection of electrode stacks in order to increase the voltage of the battery cell.

A second aspect of the present disclosure is related to a device for manufacturing a multi-cavity battery cell,
comprising:
- two or more essentially rectangular and heated seal bars; and
configured to:
- moving towards each other; and
- sealing one or two first-dimension pouch foils to a second-dimension pouch foil.

The seal bars are configured to seal an essentially rectangular connection between two pouch foils for a cavity of a battery cell. In case, the device comprises only two seal bars, a two pouch foils, a first-dimension pouch foil and a second-dimension pouch foil can be sealed together. Therefore, at least one of the seal bars needs to be movable, such that the two pouch foils can be arranged in the device and then the seal bars move together and seal the two pouch foils together.

The device can also comprise three seal bars, wherein one seal bar is even, and the other two seal bars are formed rectangular. A second-dimension pouch foil can then be arranged on the even seal bar and a first-dimension pouch foil can be arranged on the first rectangular seal bar. The part of the first-dimension pouch foil that is to be sealed can be pressed to the second-dimension pouch foil by the second rectangular seal bar. The second rectangular seal bar can then be configured as a movable seal bar.

Based on a device according to the second aspect pouch-based batteries with a single cavity / electrode stack and with a plurality of cavities can be formed.

An embodiment of the second aspect is related to a device for manufacturing a multi-cavity battery cell,
comprising:
- a fix seal bar; and
- three movable seal bars,
wherein the seal bars are configured to move towards a single point at which the corners of all four seal bars would touch.

Therefore, the three movable seal bars are actuated, e.g. by one or more servo motors. Since the pouch foils are arranged between the seal bars, the seal bars only move towards a common point but do not touch each other.

An embodiment of the second aspect is related to a device for manufacturing a multi-cavity battery cell,
wherein the corners of one or more of the seal bars are round.

This has the advantage, that the pouch foil cannot be damaged by a corner of one or more seal bars.

An embodiment of the second aspect is related to a device for manufacturing a multi-cavity battery cell,
wherein the corners are formed such that they can comprise a seal rod.

This has the advantage that sealing material, such as a polymer, can be provided in the space that is available between the foil and the seal bar due to its round corner.

A third aspect of the present disclosure is related to a method for sealing pouch-foils, in particular for batteries with multiple cavities,
configured to:
- placing a first dimension pouch-foil and a second dimension pouch foil between a plurality of rectangular formed seal bars ;
- moving two or more of the rectangular formed seal bars towards a single point at which the corners of all four seal bars would touch, such that a gap for the pouch foils remains;
- heating two or more of the seal bars such that the one or two first-dimension pouch foils are sealed to a second-dimension pouch foil.

Once a multi-cavity pouch cell has been formed, an electrolyte can be added using an injection needle, for example. Each electrode stack must be provided with an electrolyte, i.e. each cavity must be supplied with electrolyte. The holes created by the electrolyte injection needle can be sealed after the electrolyte filling operation is completed. Additionally or alternatively, the electrolyte can be provided from a side that comprises no taps. For example, in case the cavities are sealed on a top and on a bottom by sealing hats, the taps can be formed through the sealing hat that is arranged on the top side. The electrolyte can then be provided from the bottom side. After the electrolyte is provided, the bottom side can be sealed with a sealing hat for the bottom side.

### Brief description of the figures

Further advantages and features result from the following embodiments, some of which refer to the figures. The figures do not always show the embodiments to scale. The dimensions of the various features may be enlarged or reduced, in particular for clarity of description. For this purpose the figures are at least partially schematized.
Fig. 1 illustrates a multi-cavity pouch cell according to an embodiment of this disclosure.
Fig. 2 illustrates an application of a sealing hat for a multi-cavity pouch cell according to an embodiment of this disclosure.
Fig. 3 illustrates a sealing tool according to an embodiment of this disclosure.
Fig. 4 illustrates a sealing tool according to an embodiment of this disclosure.
Fig. 5 illustrates a method for sealing pouch foils according to an embodiment of this disclosure.

In the following description reference is made to the accompanying figures which form part of the disclosure, and which illustrate specific aspects in which the present disclosure can be understood. Identical reference signs refer to identical or at least functionally or structurally similar features.

In general, a disclosure of a described method also applies to a corresponding device (or apparatus) for carrying out the method or a corresponding system comprising one or more devices and vice versa. For example, if a specific method step is described, a corresponding device may include a feature to perform the described method step, even if that feature is not explicitly described or represented in the figure. On the other hand, if, for example, a specific device is described on the basis of functional units, a corresponding method may include one or more steps to perform the described functionality, even if such steps are not explicitly described or represented in the figures. Similarly, a system can be provided with corresponding device features or with features to perform a particular method step. The features of the various exemplary aspects and embodiments described above or below may be combined unless expressly stated otherwise.

### Detailed description

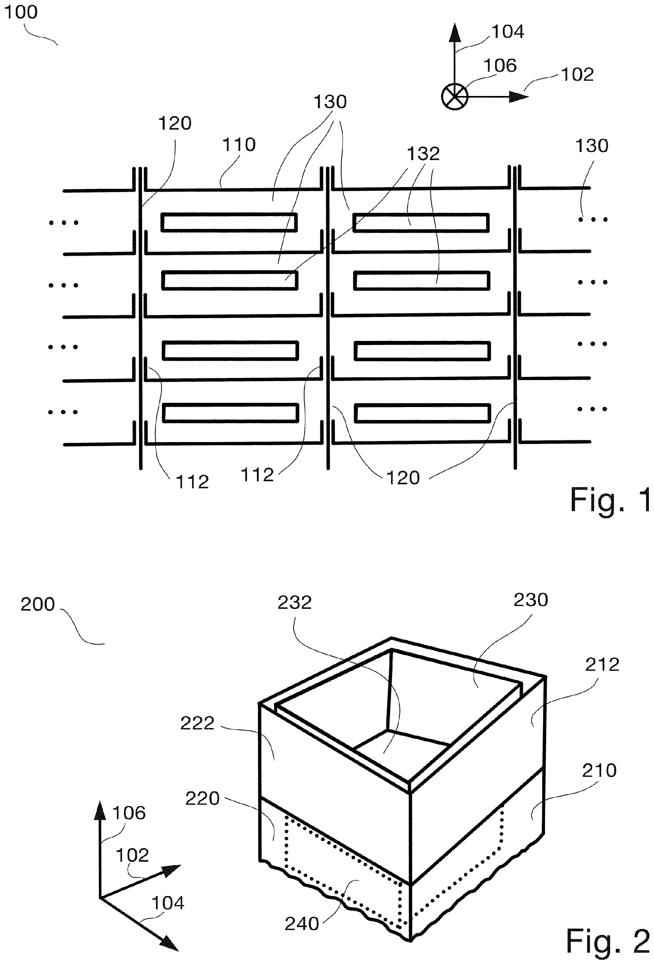

Fig. 1 illustrates a multi-cavity pouch cell 100 according to an embodiment of this disclosure. In this cell, frames for cavities of the cell are made of pouch foils. The battery cell is illustrated in a first dimension 102 and in a second dimension 104 of a Cartesian coordinate system and is shown from above 106.

The battery cell 100 comprises first-dimension pouch foils 110 (arranged horizontally) which are sealed on both sides to second-dimension pouch foils 120 (arranged vertically). For sealing, the first-dimension pouch foils have a vertical sealing portion 112 at each side. Two first-dimension pouch foils arranged vertically adjacent and two second-dimension pouch foils 120 on each side of the two first dimension pouch foils form a cavity 130. In the cavities 130, an electrode stack is arranged. A tab of each electrode stack 132 leads out to the top side of the cavity.

By arranging a pouch-cell in such a pattern, a plurality of cavities 130 can be arranged on a plane next to each other. Depending on the application, the cavities can be connected in serial connection or in parallel connection.

Fig. 2 illustrates an application of a sealing hat for sealing a top and/or a bottom of a cavity of a multi-cavity pouch cell, according to an embodiment of this disclosure. The battery cell is illustrated in a first dimension 102 and in a second dimension 104 of a Cartesian coordinate system and is shown from above 106. Only one cavity is depicted in the figure.

First-dimension pouch foils 210 and second-dimension pouch foils 220 are sealed together to form a cavity. The cavity comprises an electrode stack 240. As can be seen the first-dimension pouch foils and the second-dimension pouch foils form the sides, i.e. a frame, of the cavity.

The top of the cavity is sealed with a sealing hat 230. The sealing hat is arranged in the space that is formed by the parts 212, 222 of the pouch foils 210, 220 that extend the electrode stack. The sealing hat is arranged on top of the electrode stack 240 such that the bottom 232 of the sealing hat 230 is supported by the top of the electrode stack 240. The sides of the sealing hat are then sealed to the extending sides 212, 222 of the pouch foils 210, 220. The sealing hat can also be made of pouch foil or any other material that has good sealing characteristics.

One or both tabs can exit the cavity through the sealing hat 230. Therefore, an incision can be made in the sealing hat through which one tab of one electrode is led out of the cavity. If tabs of both electrodes are led out on the same side (e.g. through the same sealing hat) an isolation may be applied, for example, one or both tabs can be coated with an isolating material. Alternatively, the tabs can be led out of the cell by separate openings. This can in particular be implemented if the used pouch foil is isolating.

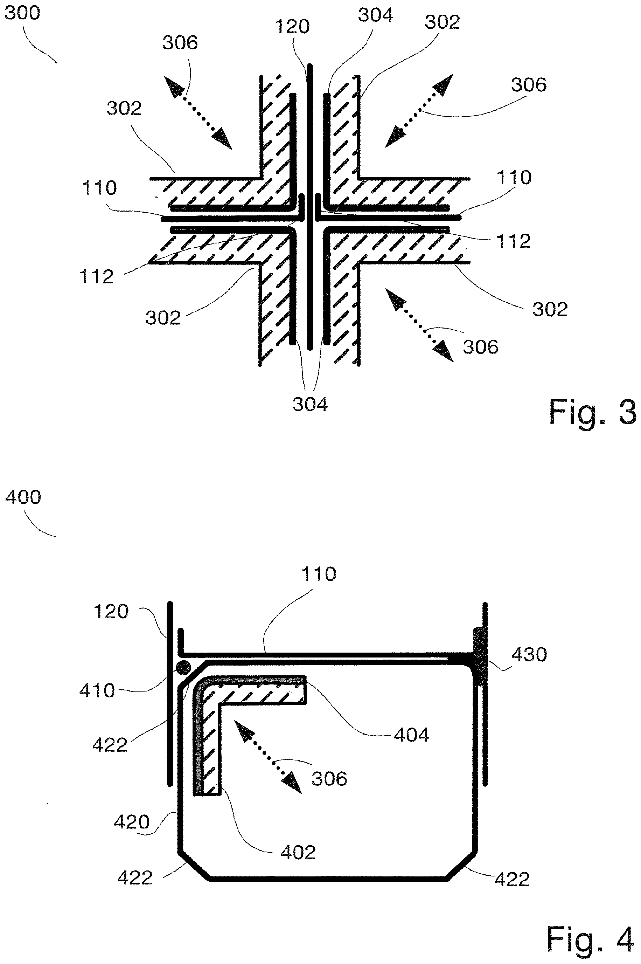

Fig. 3 illustrates a sealing tool 300 for sealing two pouch foils according to an embodiment of this disclosure. The sealing tool comprises four sealing bars 302. Each sealing bar can be heated on a heating area 304. When the heating area touches two pouch foils arranged over each other, the foils are sealed together.

The heating tool 300 is configured to heat at least from two sides. In. this way two or more layered pouch foils can be heated. As shown in the figure, two first-dimension pouch foils 110 are arranged horizontally with their sealing portion 112 arranged vertically and parallel to a second-dimension pouch foil 120. When the three actuated seal bars 302 move in their specified directions 306, the pouch foil 110 are sealed to the pouch foil 120 from both sides. This is a basic structure for a multi-cavity pouch cell that has sides made of different pouch foils sealed together.

Fig. 4 illustrates a sealing tool 400 according to an embodiment of this disclosure. The sealing tool is illustrated by one seal bar, a lower right seal bar. In principle the sealing tool can have the same design as the sealing tool of Fig. 3. It has a heating area 404 and is movable along at least one direction 306. In contrast to the embodiment of Fig. 3, the corner of the seal bar 402 is formed round. This is done to avoid damages to the pouch foils during the sealing operation.

In the illustrated sealing operation a first-dimension pouch foil 110 is sealed to a second-dimension pouch foil 120 and to a sealing hat 430. Furthermore, a seal rod 410 is arranged in the space between the pouch foils 110, 120 and the flattened corners of the sealing hat 432 and of the seal bar 402. The seal rod 410 provides material that is used for the sealing and will be used during the sealing process. This provides an enforced sealing. A completed sealing operation of the same kind is depicted on the other side of the first-dimension pouch foil 110. It shows a sealed volume 430 connecting the pouch foils 110, 120, and the sealing hat 420.

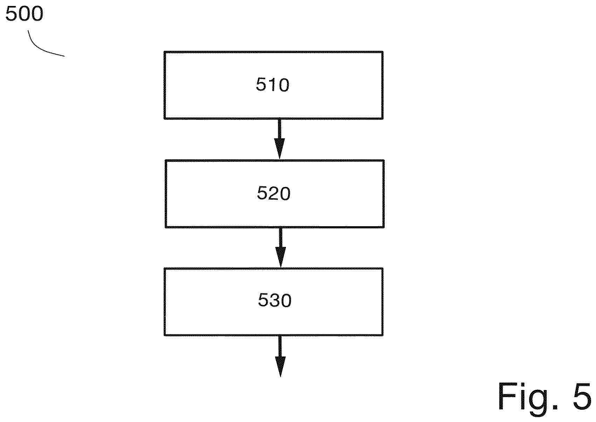

Fig. 5 illustrates a basic procedure for sealing pouch foils in an angular manner, according to an embodiment of this disclosure. In a first step 510, two pouch foils are placed under a plurality of seal bars. The seal bars are configured to seal the pouch foils in an angular manner, e.g. perpendicular towards each other. The seal bars can also consist of a single seal bar that is configured to press the pouch foils against a plate. For pressing the pouch foils together, one seal bar is configured movable, e.g. by a servo motor, in at least one dimension. In a second step 520, the seal bars are moved together, to form the seal bars such that they are arranged in the desired angle and that they touch in one or more pre-defined sealing areas. In a third step 530 the pouch foils which are arranged according to the desired angle within the seal bars are heated by the seal bars such that the pouch foils are sealed together. The seal bars can be formed such that between the seal bars and in the seal area a sealing rod can be placed. The sealing rod provides sealing material, e.g. a polymer or a metal, that will be consumed during the sealing process to enforce the sealing connection.

In order to produce a multi-cavity pouch foil, a plurality of pouch foils can be sealed together, e.g. in a rectangular structure, based on the described basic procedure. This can yield a frame for a multi-cavity pouch cell, as depicted in Fig. 1. In each cavity of this structure, an electrode stack can be placed. Afterwards, the bottom and the top can be sealed by sealing hats, which can also consist or comprise pouch foil. An electrolyte can be provided to the electrode stack either before closing the top or the bottom of a cavity, or afterwards by injection.

As used herein the term "and/or" includes any and all combinations of one or more of the associated listed items and may be abbreviated as "/".

Although some aspects have been described in the context of an apparatus, it is clear that these aspects also represent a description of the corresponding method, where a block or device corresponds to a method step or a feature of a method step. Analogously, aspects described in the context of a method step also represent a description of a corresponding block or item or feature of a corresponding apparatus.

### List of reference signs

- 100: multi cavity pouch cell
- 102: first dimension
- 104: first dimension
- 106: third dimension
- 110: first dimension pouch foil
- 112: sealing portion
- 120: second dimension pouch-foil
- 130: cavity
- 132: tab
- 210: first dimension pouch foil
- 212: extending foil
- 220: second dimension pouch foil
- 222: extending foil
- 230: sealing hat
- 240: electrode stack
- 300: sealing tool
- 302: seal bar
- 304: heating area
- 306: direction of movement
- 400: sealing tool
- 404: heating area
- 410: seal rod
- 430: sealed pouch foils
- 432: flattened corner of sealing head
- 510: placing pouch foil under seal bars
- 520: pressing pouch foils
- 530: sealing the pouch foils

## Claims

1. Battery cell,
comprising:
- a plurality of cavities (130) each hosting an electrode stack (220);
wherein at least two of the cavities are separated by a first-dimension pouch foil (110), which has a pre-defined extension in a first dimension (102) and a pre-defined extension in a third dimension (106).

2. The battery cell according to the preceding claim,
wherein a plurality of electrode stacks (220) are connected in a serial connection.

3. The battery cell according to one of the preceding claims,
comprising two second-dimension pouch foils (120) that form opposite sides of the at least two cavities (130).

4. The battery cell according to the preceding claim,
wherein the first-dimension pouch foil (110) is sealed on a first ending (112) to one of the two second-dimension pouch foils (120) and on a second ending (112) to the second of the two second-dimension pouch foils.

5. The battery cell according to the preceding claim,
wherein a second first-dimension pouch foil (110) is sealed to the two second-dimension pouch foils (120) on the opposite cavity side relative to the first first-dimension pouch foil (110), thereby forming a closed circumference for one cavity (130).

6. The battery according to one of the preceding claims,
wherein a plurality of cavities (130) is separated by the second-dimension pouch foils (120).

7. The battery according to one of the preceding claims,
comprising a housing made of pouch foil.

8. The battery according to one of the preceding claims,
comprising a sealing hat (230) placed on top of the electrode stack and sealed with the first-dimension pouch foil (210) and/or with the second-dimension pouch foil (230).

9. The battery according to the preceding claim,
comprising a sealing hat (230) placed on the bottom of the electrode stack and sealed with the first-dimension pouch foil (210) and/or the second-dimension pouch foil (230).

10. The battery cell according to one of the preceding claims,
wherein a cathode tab and/or an anode tab (132) extend the cavity (130) on a bottom and/or on a top of the cavity.

11. The battery according to one of the preceding claims,
wherein adjacent cavities (130) comprise tabs (132) of different electrode types on a side not covered by first-dimension and/or second-dimension pouch foils.

12. A device (300) for manufacturing a multi-cavity battery cell (100), comprising:
- two or more essentially rectangular and heated seal bars (302); and configured to:
- moving towards each other; and
- sealing one or two first-dimension pouch foils (110) to a second-dimension pouch foil (120).

13. The device according to the preceding claim,
comprising:
- a fix seal bar (302); and
- three movable seal bars (302),
wherein the seal bars are configured to move towards a single point at which the corners of all four seal bars would touch.

14. The device according to the preceding claim,
wherein the corners of one or more of the seal bars (402) are round.

15. The device according to the preceding claim,
wherein the corners are formed such that they can comprise a seal rod (410).

16. Method for sealing pouch-foils, in particular for a battery cell according to one of the preceding claims,
configured to:
- placing a first dimension pouch-foil (110) and a second dimension pouch foil (120) between a plurality of rectangular formed seal bars (302);
- moving two or more of the rectangular formed seal bars towards a single point at which the corners of all four seal bars would touch, such that a gap for the pouch foils remains;
- heating two or more of the seal bars such that the one or two first-dimension pouch foils are sealed to a second-dimension pouch foil.
